# EUROPÄISCHE PATENTANMELDUNG

(11) **EP 1 178 173 A1**
(43) Veröffentlichungstag der Anmeldung: **06.02.2002**
(21) Anmeldenummer: 01117590.8
(22) Anmeldetag: 20.07.2001
(51) Int. Cl.: E05C 9/02

(54) **Achsversetztes Getriebe**

(30) Priorität: 21.07.2000 DE 20012634 U
(71) Anmelder: Schüring GmbH & Co. Fenstertechnologie KG, 53842 Troisdorf (DE)
(72) Erfinder:
(74) Vertreter: Freischem, Stephan, Dipl.-Ing.

(57) **Zusammenfassung**

Die Erfindung betrifft ein Getriebe für die Übertragung einer Drehbewegung einer Antriebswelle auf eine zur Antriebswelle versetzte Abtriebswelle. Derartige Getriebe werden vorzugsweise verwendet, um einen Achsversatz zwischen einer Antriebswelle, die mit einem Tür- oder Fenstergriff verbundenen ist, und einer Abtriebswelle, die mit einem Treibstangenantrieb eines Tür- oder Fensterbeschlags verbundenen ist, auszugleichen.

Aufgabe der Erfindung ist es, ein einfaches, hoch belastbares Getriebe der genannten Art zu entwickeln.

Zur Lösung dieser Aufgabe umfaßt das Getriebe ein Gehäuse (1) mit zueinander benachbarten Lagerungen zur drehbaren Aufnahme jeweils eines Mitnehmers (2,3), der eine Einstecköffnung (7,8) für ein Wellenende aufweist, und mit einem Aufnahmeabschnitt für ein die Mitnehmer (2,3) umgebendes Ringelement (4), wobei jeder Mitnehmer (2,3) mindestens einen radialen Vorsprung (12) aufweist, der in eine Ausnehmung (15) in dem Ringelement (4) eingreift.

## Beschreibung

Die Erfindung betrifft ein Getriebe für die Übertragung einer Drehbewegung einer Antriebswelle auf eine zur Antriebswelle versetzte Abtriebswelle.

Derartige Getriebe werden verwendet, um einen Achsversatz zwischen der Antriebswelle und Abtriebswelle auszugleichen. Ein derartiger Achsversatz entsteht beispielsweise bei den Antrieben für Treibstangen, die einen Dreh-/Kippbeschlag innerhalb eines Tür- oder Fensterrahmens antreiben. Aus ästhetischen Gründen wird der Türgriff auf einem Hohlprofil des Türflügels oder Fensterflügels gelegentlich bezüglich der Drehachse des Antriebsritzels für den Treibstangenbeschlag versetzt. Um einen derartigen Achsversatz auszugleichen, wurden bereits mehrere Lösungen vorgeschlagen. Beispielsweise ist der Einsatz eines Kardan-Antriebs bekannt. Auch werden kleine Ritzel verwendet, um die Drehbewegung des Türgriffs auf das Antriebsritzel für den Dreh-/Kippbeschlag zu übertragen.

Sowohl die Kardan-Antriebe als auch die Ritzel haben den großen Nachteil, daß sie nur mit einem geringen Drehmoment belastet werden können. Aufgrund des beschränkten Bauraums können nur sehr kleine Ritzel verwendet werden. Bei einem großen Drehmoment, welches ohne weiteres von Hand auf einen Tür- oder Fenstergriff aufgebracht werden kann, können die Zähne beschädigt werden oder brechen. Gleiches gilt für den Kardan-Antrieb, bei dem zwei Wellenenden schräg in die Vierkantausnehmungen von zueinander versetzten Nüssen eingreifen. Auch hier besteht bei großem Drehmoment die Gefahr, daß die Kontaktflächen der schräg in die Vierkantausnehmungen eingreifenden Wellenenden beschädigt werden.

Aufgabe der Erfindung ist es, ein einfaches, hoch belastbares Getriebe der eingangs genannten Art zu entwickeln.

Das die Aufgabe erfindungsgemäß lösende Getriebe umfaßt ein Gehäuse mit zueinander benachbarten Lagerungen zur drehbaren Aufnahme jeweils eines Mitnehmers, der eine Einstecköffnung für ein Wellenende aufweist, und mit einem Aufnahmeabschnitt für ein die Mitnehmer umgebendes Ringelement, wobei jeder Mitnehmer mindestens einen radialen Vorsprung aufweist, der in eine Ausnehmung in dem Ringelement eingreift.

Wogegen bei einem üblichen Zahnradantrieb ein zwischen das Antriebsritzel und das Abtriebsritzel geschaltetes Kopplungsritzel die Bewegungskopplung derart bewirkt, daß das Antriebsritzel und das Abtriebsritzel einen gleichen Drehsinn aufweisen, erfolgt diese Bewegungskopplung zwischen den beiden mit Antriebswelle und Abtriebswelle verbundenen Mitnehmern über das äußere Ringelement. Da ein zwischengeschaltetes Kopplungsritzel fehlt, können die Mitnehmer mit geringem Achsversatz nahe nebeneinander angeordnet werden. Vorzugsweise erstrecken sich die radialen Vorsprünge beider Mitnehmer auf der jeweils von dem anderen Mitnehmer abgewandten Seite. Dadurch ist es möglich, den Achsversatz weiterhin zu reduzieren, da kein Freiraum für aneinander vorbei bewegte Vorsprünge der beiden Mitnehmer geschaffen werden muß.

Diese Anordnung ermöglicht einen weiteren Vorteil. Tür- und Fenstergriffe haben üblicherweise einen begrenzten Schwenkbereich von 90 oder 180°. Es ist sinnvoll, auch das Getriebe für die Übertragung einer Drehbewegung von der Antriebswelle des Türgriffs auf die Abtriebswelle eines Öffnungsgetriebes für einen Tür- oder Fensterflügel auf diesen Winkelbereich einzuschränken. Dies kann dadurch erzielt werden, daß die radialen Vorsprünge der Mitnehmer einen Anschlag für deren Drehbewegung bilden. Bei der Verwendung von zwei Vorsprüngen pro Mitnehmer können diese sich entlang radialer Mittellinien erstrecken, die einen Winkel von etwa 90° zueinander aufweisen. Eine geeignete Konturenführung ergibt, daß in der ersten Anschlagsposition der beiden Mitnehmer jeweils ein erster radialer Vorsprung jedes Mitnehmers gegen den jeweils benachbarten Mitnehmer anliegt. In einer zweiten Endposition des Schwenkbereichs liegt der jeweils andere radiale Vorsprung jedes Mitnehmers gegen den benachbarten Mitnehmer an. Dadurch wird erreicht, daß in der Anschlagsposition auf den Tür- oder Fenstergriff aufgebrachte Drehmomente nicht über das erfindungsgemäße Getriebe in die Schließvorrichtung eingeleitet werden. Das Getriebe sichert somit die oft gegen Überdrehen des Griffes anfälligen Schließvorrichtungen (z.B. Treibstangenantrieb mit Antriebsritzel) gegen Zerstörung.

Vorzugsweise wird das Getriebe so gestaltet, daß Standardteile des Türoder Fensterbaus in Verbindung mit dem Getriebe verwendet werden können. Üblicherweise weisen Türgriffe oder Fenstergriffe einen Vierkantdorn auf, der die Antriebswelle bildet. Die Schließvorrichtung der Tür oder des Fensters, insbesondere ein Treibstangenantrieb weist eine Vierkantausnehmung auf, in welche der Vierkantdorn einsteckbar ist. Aus diesem Grund weisen vorzugsweise die Einstecköffnungen beider Mitnehmer einen im wesentlichen quadratischen Querschnitt auf. In den ersten Mitnehmer greift der Vierkantdorn des Tür- oder Fenstergriffs als Antriebswelle ein. In die Einstecköffnung des zweiten Mitnehmers ist ein Vierkantstab eingesteckt, dessen anderes Ende mit der Vierkantausnehmung der Schließvorrichtung verbunden ist.

Da die üblichen Schließvorrichtungen beispielsweise von Flügeln mit Dreh-/Kippbeschlägen so ausgerichtet sind, daß bei einer 90°-Drehung des in die Schließvorrichtung eingreifenden Vierkantdorns die erste Stellung (Drehstellung) des Flügels und bei einer Drehung um weitere 90° die zweite Stellung (Kippstellung) des Flügels erreicht ist, sollte die Bewegung der Antriebswelle ohne Übersetzung, d.h. im Verhältnis 1 : 1 auf die Abtriebswelle übertragen werden. Voraussetzung hierfür ist, daß bei beiden Mitnehmern der Abstand ihrer Drehachse zum Eingriffspunkt, d.h. dem gegen die Wandung der Ausnehmung im Ringelement anliegenden Punkt des radialen Vorsprungs des jeweiligen Mitnehmers, gleich ist. Vorteilhafterweise werden zwei Mitnehmer mit identischer Form verwendet, so daß ein identischer radialer Abstand gewährleistet ist. Durch die Verwendung zweier gleicher Mitnehmer wird die Teilevielfalt und damit der Herstellungspreis reduziert.

Vorzugsweise weist jeder radiale Vorsprung einen breiten Kopfabschnitt mit gerundeter Außenfläche auf, der ohne nennenswertes Spiel in der Ausnehmung des Ringelements gehalten ist. Da beim Verdrehen der Mitnehmer ein Verklemmen der radialen Vorsprünge in den Ausnehmungen des Ringelements vermieden werden muß, sollte sich an den Kopfabschnitt ein schmalerer Halsabschnitt anschließen, der die Relativbewegung zwischen der Innenkante der Ausnehmung des Ringelements und dem radialen Vorsprung ermöglicht.

Vorzugsweise sind bei einem Schwenkweg von 180° an jedem Mitnehmer zwei radiale Vorsprünge vorgesehen, die in zwei entsprechende Ausnehmungen in dem Ringelement eingreifen. Der Winkelversatz zwischen den beiden Vorsprüngen jedes Mitnehmers beträgt etwa 90°. Der Winkelversatz zwischen den radialen Ausnehmungen des Ringelements hängt von dem Verhältnis des Abstandes des wirksamen Eingriffspunktes des Vorsprungs in die Ausnehmung zur Mitnehmerachse zu dem Abstand dieses Eingriffspunktes zur Achse des Ringelements ab. Bei möglichst kleiner Bauform liegt der Winkelabstand zwischen den zwei Ausnehmungen, die den beiden radialen Vorsprüngen eines Mitnehmers zugeordnet sind, bei etwa 60°.

Um eine einfache Montage zu gewährleisten, ist das Gehäuse des erfindungsgemäßen Getriebes einseitig offen und durch einen Deckel verschließbar. Die Lagerung jedes der zwei Mitnehmer wird dabei vorzugsweise durch einander gegenüberliegende, kreisrunde Öffnungen gebildet, die einerseits in dem Gehäuse und andererseits in dem Deckel angeordnet sind. In diese Öffnungen ragt jeweils ein stirnseitiger zylindrischer Endabschnitt jedes Mitnehmers hinein. Das Ringelement wird in einen die beiden Mitnehmer umgebenden, im wesentlichen zylindrischen Lagersitz des Gehäuses eingefügt und dort durch den Gehäusedeckel fixiert.

Ferner kann das Getriebe durch eine Abdeckkappe abgedeckt sein, welche zumindest im Bereich eines der beiden Mitnehmer einen Durchbruch aufweist. Das erfindungsgemäße Getriebe ist zur Montage in einem Türoder Fensterflügel aus Hohlprofilen, üblicherweise Kunststoff- oder Aluminium-Hohlprofilen, vorgesehen. Für die Aufnahme des Getriebes weisen diese Hohlprofile Ausfräsungen auf. Die Abdeckkappe kaschiert diese Ausfräsung bei eingesetztem Getriebe.

Da der Griff auf einer Seite des Getriebes und die Schließvorrichtung auf der anderen Seite des Getriebes liegt, ist es sinnvoll, daß die Einstecköffnungen der zwei Mitnehmer, in welche die beiden Wellenenden eingefügt werden, auf einander gegenüberliegenden Seiten des Gehäuses münden. Auch können die Einstecköffnungen die Mitnehmer vollständig durchragen. In diesem Fall muß zwischen einer Vorderseite und einer Rückseite des erfindungsgemäßen Getriebes nicht unterschieden werden. So wird vermieden, daß für den Rechtsanschlag und den Linksanschlag von Tür- oder Fensterflügeln besondere Vorkehrungen getroffen und Montageanleitungen erteilt werden müssen.

Wie bereits angesprochen, dient das erfindungsgemäße Getriebe vorzugsweise dem Einsatz im Tür- oder Fensterbau, wobei das erste Wellenende (Antriebswellenende) von dem Vierkantabschnitt eines Tür- oder Fenstergriffs gebildet wird und das zweite Wellenende (Abtriebs-Wellenende) von einem Vierkantstab gebildet wird, der mit einer Antriebsnuß einer Schließvorrichtung verbunden ist. Ferner umfaßt die vorliegende Erfindung auch einen Tür- oder Fensterflügel, in den ein zuvor beschriebenes Getriebe eingebaut ist.

Nachfolgend wird eine Ausführungsform des erfindungsgemäßen Getriebes unter Bezugnahme auf die beigefügten Zeichnungen erläutert. Die Zeichnungen zeigen in:
- Fig. 1: eine schaubildliche Darstellung der Bauteile des erfindungsgemäßen Getriebes,
- Fig. 2 bis 4: Draufsichten auf das erfindungsgemäße Getriebe in drei verschiedenen Schaltstellungen,
- Fig. 5: eine schaubildliche Darstellung des zusammengesetzten Getriebes aus Fig. 1 ohne Gehäusedeckel und ohne Abdeckkappe,
- Fig. 6: eine schaubildliche Vorderansicht des zusammengesetzten Getriebes aus Fig. 1,
- Fig. 7: eine schaubildliche Rückansicht des Getriebes aus Fig. 6,
- Fig. 8: eine schematische Draufsicht auf ein Flügelprofil eines Fensters mit einem Getriebe gemäß den Fig. 1 bis 7.

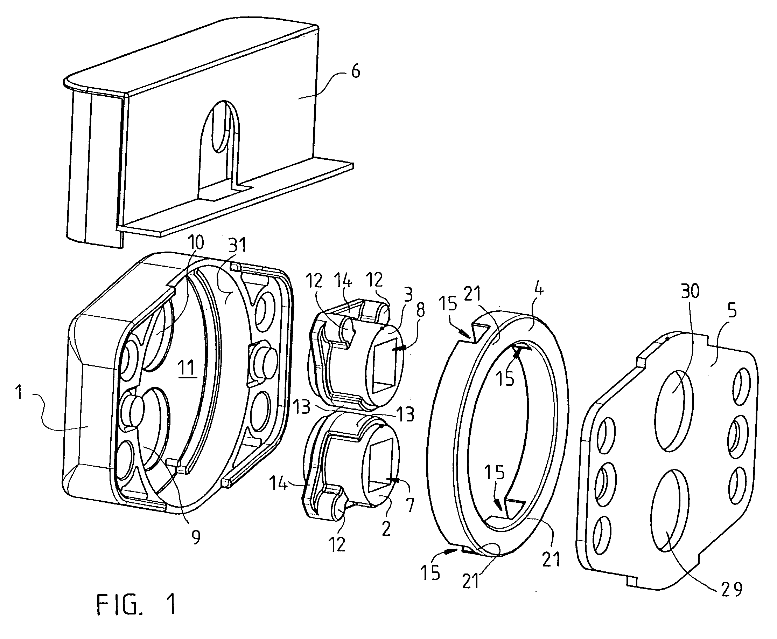

In Fig. 1 ist zu erkennen, daß sich das erfindungsgemäße Getriebe aus sechs Einzelteilen zusammensetzt, nämlich einem Gehäuse 1, zwei Mitnehmern 2,3, einem Ringelement 4, einem Gehäusedeckel 5 und einer Abdeckkappe 6.

Die Elemente für die Übertragung der Bewegung sind die beiden Mitnehmer 2 und 3 sowie das Ringelement 4. Diese drei ineinander eingreifenden Elemente 2,3,4 sind drehbar in dem mit dem Deckel 5 verschlossenen Gehäuse 1 aufgenommen.

Jeder der Mitnehmer 2,3, der im Fensterbau auch als Transportnuß bezeichnet wird, besteht im wesentlichen aus einem zylindrischen Körper, der eine Einstecköffnung 7,8 mit quadratischem Querschnitt aufweist. Beide Einstecköffnungen 7,8 durchragen den jeweiligen Mitnehmer 2,3 vollständig. Beide Mitnehmer 2,3 sind im Bereich ihrer Stirnseiten in kreisrunden Öffnungen 9,10; 29,30 aufgenommen. Zwei der Öffnungen 9,10 befinden sich in einer Wand 11 des Gehäuses 1 und die anderen beiden 29,30 im Deckel 5. Bei verschlossenem Gehäuse 1 liegen die Öffnungen 29,30 im Deckel 5 den Öffnungen 9,10 in der Gehäusewand 11 gegenüber, so daß die Mittelpunkte jeweils zweier Öffnungen 9,29 bzw. 10,30 auf der Drehachse eines Mitnehmers 2 bzw. 3 liegen.

Um die Mitnehmer 2,3 in ihrer Position zu arretieren und gegen Verkanten oder Verrutschen zu sichern, wenn ihre stirnseitigen Enden in den einander gegenüberliegenden runden Öffnungen 9,29 bzw. 10,30 aufgenommen sind, weisen die Mitnehmer 2,3 verschiedene radial aus ihrer Zylinderform herausragende Stützelemente auf, welche einerseits gegen die Gehäusewand 11 und andererseits gegen den Deckel 5 anliegen. Jeder Mitnehmer 2,3 weist zwei radiale Vorsprünge 12 auf einer Seite seiner waagerechten Mittellinie und einem angeformten, zylindermantelförmigen Stützkörper 13 auf der anderen Seite der waagerechten Mittellinie auf. Diese Stützelemente sind in dem gegen die Gehäusewand 11 anliegenden Bereich durch eine umlaufende Verstärkungswand 14 miteinander verbunden. Die Form der radial vorstehenden Stützelemente kann variiert werden, so lange die Endflächen dieser Stützelemente in einer zur Drehachse des Mitnehmers 2,3 rechtwinkligen Ebene liegen und eine flächige Abstützung gegen die Gehäusewand 11 einerseits und den Gehäusedeckel 5 andererseits bilden. Die in den Zeichnungen erkennbare Form der Mitnehmer wurde gewählt, um seine Produktion als einstückiges metallisches Bauteil in einem formengebundenen Herstellungsverfahren, beispielsweise einem Feinguß-, Druckguß- oder Sinter-Verfahren, zu begünstigen.

Die radialen Vorsprünge 12 gewährleisten die Übertragung der Bewegung eines der beiden Mitnehmer 2,3 auf den anderen. Die Bewegungskopplung erfolgt durch das die Mitnehmer 2,3 umgebende Ringelement 4, welches im oberen und unteren Bereich jeweils zwei Ausnehmungen 15 aufweist und in einem zylindrischen Lagersitz 31 des Gehäuses 1 drehbar gehalten ist.

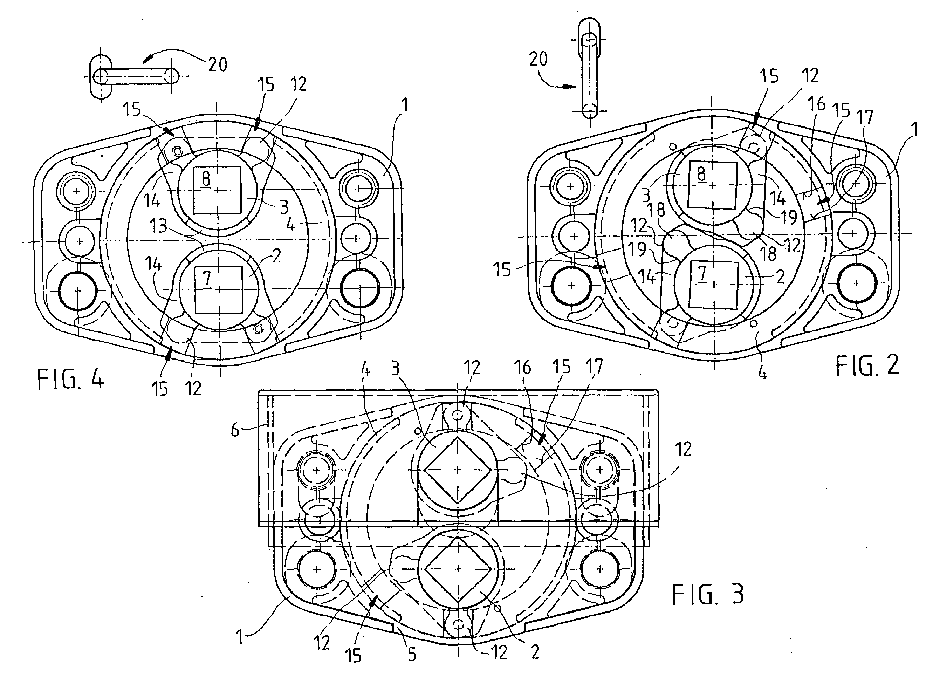

Wie insbesondere in den Fig. 2 und 3 zu erkennen, ist jede Ausnehmung 15 symmetrisch zu ihrer in radialer Richtung des Ringelementes 4 verlaufenden Mittellinie ausgebildet und weist zwei ebene, im wesentlichen parallel zu ihrer Mittellinie verlaufende Seitenwände 16,17 auf. Um beim Eingriff in die Ausnehmung 15 eine leichtgängige Bewegung der radialen Vorsprünge 12 zu gewährleisten, weisen diese einen Kopfabschnitt 18 auf, dessen Außenfläche im wesentlichen zylindermantelförmig gerundet ist. An den Kopfabschnitt 18 schließt sich ein schmaler Halsabschnitt 19 an, so daß der breite Kopfabschnitt 18 über seitliche Einschnürungen des schmaleren Halsabschnitts 19 an den Mitnehmer 2 bzw. 3 angeformt ist. Die Einschnürungen der schmalen Halsabschnitte 19 entsprechen den Verläufen der radial innenliegenden Kanten der Seitenwände 16,17 der Ausnehmungen 15 im Ringelement 4. Insbesondere in den Fig. 2 und 4 ist zu erkennen, daß die Einschnürungen im Bereich des Halsabschnitts 19 eine Aufnahme für diese Kanten bieten, wobei der Kopfabschnitt 18 über seine gerundete Außenfläche gegen die jeweilige Seitenwand 16 bzw. 17 anliegt. Trotz der Einschnürungen steht ein erheblich größerer kraftübertragender Querschnitt an jedem radialen Vorsprung 12 als an einem Zahn eines Zahnrads zur Verfügung. Zusätzlich wird die Stabilität der radialen Vorsprünge 12 durch die Verstärkungswand 14 verstärkt.

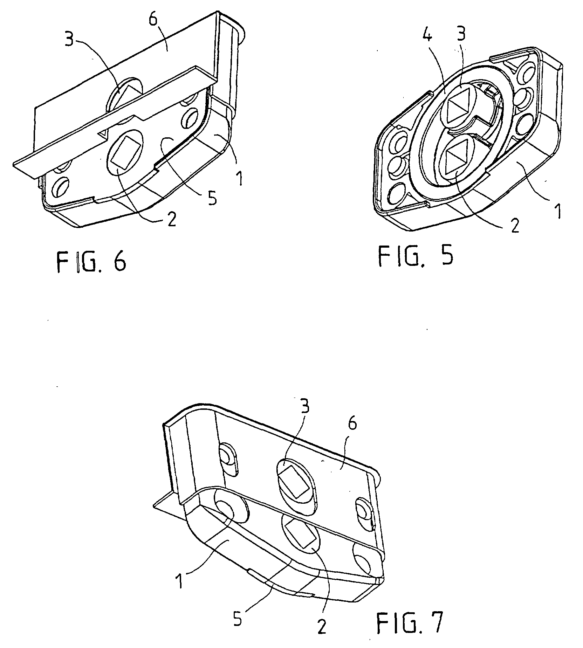

Das Ringelement 4 dient somit als Transportring, der die Drehbewegung eines Mitnehmers 2 bzw. 3 über dessen radialen Vorsprung 12 und die Ausnehmungen 15 des Ringelements 4 zum anderen Mitnehmer 3 bzw. 2 überträgt. Insbesondere in den Fig. 4 und 6 ist zu erkennen, daß durch die gewählte Konstruktionsweise ein besonders kleiner Bauraum und somit ein besonders geringer Achsversatz zwischen dem ersten Mitnehmer 2 und dem zweiten Mitnehmer 3 realisiert werden kann. An ihren einander zugewandten Seiten weisen die Mitnehmer 2,3 keine nennenswerten radialen Vorsprünge mit Ausnahme der Stützkörper 13 auf. Da das erfindungsgemäße Getriebe bevorzugt eine Bewegungsübertragung in einem begrenzten Schwenkbereich ermöglicht, können die Stützkörper 13 bis auf einen Abstand von wenigen Millimetern aneinander angenähert werden.

Insbesondere in Fig. 2 ist zu erkennen, daß die in die Ausnehmungen 15 eingreifenden radialen Vorsprünge 12 in Verbindung mit der der Kontur dieser radialen Vorsprünge 12 folgenden Verstärkungswand 14 einen Endanschlag für den Schwenkbereich der Mitnehmer 2,3 bilden. In Fig. 2 ist das Getriebe in seiner ersten Schwenkstellung gezeigt. Dabei liegt der an den oberen radialen Vorsprung 12 des unteren Mitnehmers 2 angeformte Bereich der Verstärkungswand 14 gegen den Umfang des oberen Mitnehmers 3 an. Gleichermaßen liegt der an den unteren radialen Vorsprung 12 des oberen Mitnehmers 3 angeformte Bereich der Verstärkungswand 14 gegen den Umfang des unteren Mitnehmers 2 an. In der anderen extremen Schwenkstellung sind beide Mitnehmer 2,3 um 180° um ihre Drehachse gedreht, so daß sie eine spiegelbildliche Anordnung zu der in Fig. 2 gezeigten aufweisen. Dabei bilden die jeweils an die radialen Vorsprünge 12, die in Fig. 2 in Eingriff mit dem Ringelement 4 stehen, angeformten Bereiche der Verstärkungswand 14 die Endanschläge für die Schwenkbewegung der Mitnehmer 2 bzw. 3.

Die Kinematik des Getriebes geht aus den Fig. 2 bis 4 hervor. In der in Fig. 2 dargestellten Schließstellung, welche durch den oben links in Fig. 2 gezeigten, nach unten gerichteten Fenstergriff 20 symbolhaft dargestellt ist, greift nur ein radialer Vorsprung 12 jeder der Mitnehmer 2,3 in eine Ausnehmung 15 des Ringelements 4 ein. Bei einer Drehung des Fenstergriffs 20 aus der in Fig. 2 dargestellten Stellung entgegen dem Uhrzeigersinn um 45° nehmen die Mitnehmer 2,3 die in Fig. 3 erkennbare Stellung ein. Weiterhin befindet sich der obere radiale Vorsprung 12 des oberen Mitnehmers 3 in Eingriff mit der oben liegenden Ausnehmung 15 des Ringelements 4. Der untere radiale Vorsprung 12 des unteren Mitnehmers 2 greift in die unten liegende Ausnehmung 15 des Ringelements 4 ein. Gleichzeitig bewegen sich die freien radialen Vorsprünge 12 der Mitnehmer 2,3 auf die ihnen zugeordneten Ausnehmungen 15 im Ringelement 4 zu. Eine weitere Drehung des Fenstergriffs 20 gegen den Uhrzeigersinn in die in Fig. 4 dargestellte Position führt zu einer weiteren Drehbewegung der Mitnehmer 2,3 in die in Fig. 4 gezeigte Stellung, in der beide radialen Vorsprünge 12 beider Mitnehmer 2,3 in Ausnehmungen 15 des Ringelements 4 eingreifen. Bei einem weiteren Verdrehen des Fenstergriffs 20 im Gegenuhrzeigersinn um 45° nehmen die Transportnüsse (Mitnehmer) 2,3 sowie der Transportring (Ringelement) 4 eine zu der in Fig. 3 gezeigten Lage spiegelbildliche Anordnung ein. Ein weiteres Verdrehen des Fenstergriffs 20 um 45° im Gegenuhrzeigersinn führt zur zweiten Anschlagsposition der Mitnehmer 2,3 und des Ringelements 4, welche spiegelbildlich zu der in Fig. 2 gezeigten Position ist.

In Fig. 3 ist das Getriebe mit Deckel 5 und Abdeckkappe 6 dargestellt, so daß die radialen Vorsprünge 12 der Mitnehmer 2,3 von dem Deckel verdeckt sind und durch dünne, gestrichelte Linien eingezeichnet sind. In den Fig. 2 und 4 ist das Getriebe ohne Deckel in Draufsicht dargestellt, wobei lediglich die in die Ausnehmungen 15 des Ringelements 4 eingreifenden radialen Vorsprünge 12 der Mitnehmer verdeckt sind.

Eine schaubildliche Darstellung des Getriebes ohne Deckel 5 ist der Fig. 5 zu entnehmen. Die Fig. 5 zeigt in Verbindung mit Fig. 1 die besonders einfache Montierbarkeit des erfindungsgemäßen Getriebes. Zunächst müssen einfach die Transportnüsse oder Mitnehmer 2,3 mit ihren an die Verstärkungswand 14 angrenzenden stirnseitigen Zylinderabschnitten in die runden Öffnungen 9,10 in der Gehäusewand 11 eingelegt werden. Sodann wird das Ringelement (Transportring) 4 in den zylindrischen Lagersitz 31 (Fig. 1) innerhalb des Gehäuses 1 eingelegt, wobei die Ausnehmungen 15 des Ringelements 4 jeweils einen radialen Vorsprung der Mitnehmer 2,3 aufnehmen. Da beide Mitnehmer 2,3 identisch ausgebildet sind, ist ein Austauschen der Mitnehmer für die Funktion des Getriebes unerheblich. Anders als bei der Bewegungsübertragung über Zahnräder kann ein Winkelversatz um wenige Grad bei der Montage des erfindungsgemäßen Getriebes nicht auftreten. Die Mitnehmer 2,3 sowie das Ringelement 4 können nur in einer konkreten funktionalen Anordnung zusammengefügt werden, so daß ein Montagefehler ausgeschlossen ist. Bereits die Stegabschnitte 21, die im Bereich der Ausnehmungen 15 des Ringelements 4 ausgebildet sind, arretieren die Mitnehmer 2,3 in ihrer Lage innerhalb des Gehäuses (vgl. Fig. 5). Zur weiteren Fixierung der beweglichen Elemente 2,3,4 innerhalb des Gehäuses 1 ist auf die zusammengesetzte Anordnung aus Fig. 5 lediglich der Deckel 5 aufzubringen und mit dem Gehäuse 1 zu verbinden. Dies kann über eine Schraubverbindung, Klebverbindung, Schweißverbindung oder Nietverbindung erfolgen. Ebenfalls kann der einfache Zusammenhalt des Deckels 5 und des Gehäuses 1 durch Aufschieben der Abdeckkappe 6 (Fig. 6 und 7) erzielt werden.

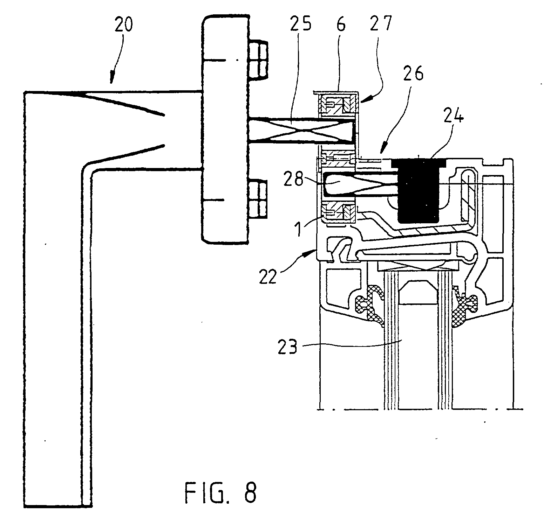

Die Funktion der Abdeckkappe 6 läßt sich der Fig. 8 entnehmen. Hier ist ein Hohlprofil 22 eines Fensters mit Doppelverglasung 23 zu erkennen. Die Öffnungs- und Schließvorrichtung 24 des Fensterflügels weist eine Vierkantaufnahme auf, in welche üblicherweise ein Vierkantdorn 25 eines Fenstergriffes 20 (in Fig. 8 mit vergrößertem Maßstab dargestellt) eingreift.

In verschiedenen Anwendungsfällen ist es erforderlich, den Vierkantdorn 25 des Fenstergriffs 20 versetzt zu der Schließvorrichtung 24 anzuordnen. Beispielsweise wird aus ästhetischen Gründen der Fenstergriff 20 gelegentlich mittig zu einem über die Falzfläche 26 des Hohlprofils 22 hinausragenden, umlaufenden Steg 27 des Hohlprofils angeordnet. Die Schließvorrichtung 24 schließt bündig mit der Falzfläche ab, so daß der Achsversatz zum Fenstergriff 20 entsteht. Zwischen dem Fenstergriff 20 und der den Fenstergriff 20 tragenden Fläche des Hohlprofils 22 ist eine sogenannte Schlagleiste (nicht dargestellt) angeordnet. Der Achsversatz zwischen Schließvorrichtung 24 und Fenstergriff 20 wird durch das erfindungsgemäße Getriebe ausgeglichen. Hierzu ist in dem umlaufenden Steg 27 des Hohlprofils 22 eine entsprechende Ausnehmung einzufräsen. Die hierdurch entstehende Profilunterbrechung wird durch die Abdeckkappe 6, welche das Gehäuse 1 des erfindungsgemäßen Getriebes umgibt, aufgefüllt. Die Abdeckkappe 6 sollte daher die gleiche Farbe und Oberflächenstruktur aufweisen wie das Hohlprofil 22. In die Vierkant-Einstecköffnung des ersten Mitnehmers greift nun der Vierkantdorn 25 des Fenstergriffs 20 ein. Die zweite Vierkant-Einstecköffnung des zweiten Mitnehmers wird über einen Vierkantstab 28 mit der Schließvorrichtung 24 des Fensterflügels verbunden, welche üblicherweise ebenfalls eine Transportnuß mit einer Vierkant-Einstecköffnung aufweist.

### Bezugszeichenliste:

- 1: Gehäuse
- 2: Mitnehmer
- 3: Mitnehmer
- 4: Ringelement
- 5: Deckel
- 6: Abdeckkappe
- 7: Einstecköffnung
- 8: Einstecköffnung
- 9: runde Öffnung
- 10: runde Öffnung
- 11: Gehäusewand
- 12: radialer Vorsprung
- 13: Stützkörper
- 14: Verstärkungswand
- 15: Ausnehmung
- 16: Seitenwand
- 17: Seitenwand
- 18: Kopfabschnitt
- 19: Halsabschnitt
- 20: Fenstergriff
- 21: Stegabschnitt
- 22: Hohlprofil
- 23: Doppelverglasung
- 24: Schließvorrichtung
- 25: Vierkantdorn
- 26: Falzfläche
- 27: Steg
- 28: Vierkantstab
- 29: runde Öffnung
- 30: runde Öffnung
- 31,: zylindrischer Lagersitz

## Patentansprüche

1. Getriebe für die Übertragung einer Drehbewegung einer Antriebswelle auf eine zur Antriebswelle versetzte Abtriebswelle, **gekennzeichnet durch** ein Gehäuse (1) mit zueinander benachbarten Lagerungen zur drehbaren Aufnahme jeweils eines Mitnehmers (2,3), der eine Einstecköffnung (7,8) für ein Wellenende aufweist, und mit einem Aufnahmeabschnitt für ein die Mitnehmer (2,3) umgebendes Ringelement (4), wobei jeder Mitnehmer (2,3) mindestens einen radialen Vorsprung (12) aufweist, der in eine Ausnehmung (15) in dem Ringelement (4) eingreift.

2. Getriebe nach Anspruch 1, **dadurch gekennzeichnet, daß** die radialen Vorsprünge (12) auf der Seite jedes Mitnehmers (2 bzw.3) angeordnet sind, die von dem jeweils benachbarten Mitnehmer (3 bzw. 2) abgewandt ist.

3. Getriebe nach Anspruch 1 oder 2, **dadurch gekennzeichnet, daß** der Drehbereich der Mitnehmer (2,3) begrenzt ist, wobei die radialen Vorsprünge (12) Anschläge für die Drehbewegung der Mitnehmer (2,3) bilden.

4. Getriebe nach einem der vorangehenden Ansprüche, **dadurch gekennzeichnet, daß** die Einstecköffnung (7,8) einen im wesentlichen quadratischen Querschnitt hat.

5. Getriebe nach einem der vorangehenden Ansprüche, **dadurch gekennzeichnet, daß** es zwei Mitnehmer (2,3) mit identischer Form aufweist.

6. Getriebe nach einem der vorangehenden Ansprüche, **dadurch gekennzeichnet, daß** jeder radiale Vorsprung (12) einen schmalen Halsabschnitt (19) und einen breiten Kopfabschnitt (18) mit gerundeter Außenfläche aufweist.

7. Getriebe nach einem der vorangehenden Ansprüche, **dadurch gekennzeichnet, daß** das Ringelement (4) in zwei einander diametral gegenüberliegenden Bereichen jeweils mindestens eine Ausnehmung (15) zur Aufnahme eines radialen Vorsprungs (12) eines der beiden Mitnehmer (2,3) aufweist.

8. Getriebe nach einem der vorangehenden Ansprüche, **dadurch gekennzeichnet, daß** jeder Mitnehmer (2,3) zwei radiale Vorsprünge (12) und jeder der zwei genannten Bereiche des Ringelements (4) zwei Ausnehmungen (15) aufweist.

9. Getriebe nach einem der vorangehenden Ansprüche, **dadurch gekennzeichnet, daß** sein Gehäuse (1) einseitig offen und durch einen Deckel (5) verschließbar ist.

10. Getriebe nach Anspruch 9, **dadurch gekennzeichnet, daß** die Lagerung für jeden Mitnehmer (2,3) durch einander gegenüberliegende runde Öffnungen (9,10 bzw. 29,30) einerseits in dem Gehäuse (1) und andererseits in dem Deckel (5) gebildet werden, in welche jeweils ein zylindrischer Endabschnitt des jeweiligen Mitnehmers (2,3) hineinragt.

11. Getriebe nach einem der vorangehenden Ansprüche, **dadurch gekennzeichnet, daß** es eine Abdeckkappe (6) aufweist.

12. Getriebe nach einem der vorangehenden Ansprüche, **dadurch gekennzeichnet, daß** die Einstecköffnungen (7,8) für die beiden Wellenenden auf einander gegenüberliegenden Seiten des Gehäuses (1) münden.

13. Getriebe nach einem der vorangehenden Ansprüche, **dadurch gekennzeichnet, daß** die Einstecköffnungen (7,8) die Mitnehmer (2,3) vollständig durchragen.

14. Getriebe nach einem der vorangehenden Ansprüche, **dadurch gekennzeichnet, daß** das erste Wellenende von dem Vierkantdorn (25) eines Türoder Fenstergriffs (20) gebildet wird und daß das zweite Wellenende von einem Vierkantstab (28) gebildet wird, der mit einer Schließvorrichtung (24) einer Tür oder eines Fensters verbunden ist.

15. Tür- oder Fensterflügel, **dadurch gekennzeichnet, daß** er ein Getriebe nach einem der vorangehenden Ansprüche aufweist.

16. Tür- oder Fensterflügel nach Anspruch 15, **dadurch gekennzeichnet, daß** mit der Abtriebswelle des Getriebes ein Treibstangenantrieb gekoppelt ist.

17. Tür- oder Fensterflügel nach Anspruch 16, **dadurch gekennzeichnet, daß** der Treibstangenantrieb zur Betätigung eines Dreh-/Kippbeschlag vorgesehen ist.
